# EUROPÄISCHE PATENTSCHRIFT

(11) **EP 1 532 511 B1**
(45) Veröffentlichungstag und Bekanntmachung des Hinweises auf die Patenterteilung: **08.10.2014**
(21) Anmeldenummer: 03797206.4
(22) Anmeldetag: 23.07.2003
(51) Int. Cl.: G06F 21/57, G06F 21/79

(54) **Fahrzeug-Steuergerät für eine Kfz-Komponente mit Schutz vor Manipulationen**
Vehicle controller for a vehicle component having protection against manipulations
Appareil de commande de véhicule pour un composant de véhicule avec protection contre des manipulations

(30) Priorität: 21.08.2002 DE 10238093
(43) Veröffentlichungstag der Anmeldung: 25.05.2005
(73) Patentinhaber: AUDI AG, 85045 Ingolstadt (DE)
(72) Erfinder: FEILEN, Oliver, 85101 Lenting (DE); STADTMÜLLER, Rüdiger, 85055 Ingolstadt-Etting (DE)
(86) Internationale Anmeldenummer: PCT/EP2003/008024
(87) Internationale Veröffentlichungsnummer: WO 2004/027587

(56) Entgegenhaltungen:
- EP-A- 1 197 826
- WO-A-98/58305

## Beschreibung

Die vorliegende Erfindung betrifft ein vor Manipulationen geschütztes Fahrzeug-Steuergerät, das in einem Fahrzeug montiert ist und das zumindest einen ursprünglichen Mikrorechner und zumindest einen ursprünglichen Speicherbaustein beinhaltet.

In Kraftfahrzeugen werden heutzutage zur Steuerung einzelner Kfz-Komponenten Steuergeräte verwendet, wie beispielsweise das Motorsteuergerät oder das Getriebesteuergerät. Die zum Betrieb von solchen Steuergeräten erforderlichen Informationen, wie beispielsweise Programme und Daten, werden verschlüsselt oder unverschlüsselt in Speicherbausteinen (E²PROM, Flash und dergleichen) abgelegt. Das Verschlüsselungsverfahren ist dabei unabhängig von einer festen Hardware-Kombination von Bausteinen und in der Regel in einem wiederbeschreibbaren Speichermedium abgelegt.

Der Nachteil solcher Steuergeräte und der verwendeten Programme besteht darin, dass einzelne Speicherbausteine ausgetauscht werden können, bzw. die Daten auf den Speicherbausteinen über eine Diagnoseschnittstelle oder über direkten Zugriff auf den Speicherbaustein überschrieben werden können. Der Austausch eines Speicherbausteins oder das Überschreiben der auf diesem Speicherbaustein gespeicherten Daten und Programme kann dazu führen, dass die Kfz-Komponente mit anderen Kenndaten arbeitet. Dies wird beispielsweise bei dem sogenannten Chip-Tuning durchgeführt, bei dem Speicherbausteine, die dem Motorsteuergerät zugeordnet sind, ausgetauscht bzw. die auf diesen Speicherbausteinen gespeicherten Programme und Daten, wie Kenndaten, geändert werden. Dadurch kann beispielsweise eine Erhöhung der Leistung und/oder des Drehmoments des Motors erzielt werden. Wird diese Manipulation durchgeführt ohne die weiteren Kfz-Komponenten, wie Ölkühler, Turbolader oder Bremsen anzupassen, so kann es zu Schäden an diesen Kfz-Komponenten und sicherheitskritischen Zuständen kommen.

Die EP 1 197 826 A1 beschreibt ein Verfahren zum Erhöhen der Fälschungssicherheit einer Speicherkarte. Auf der Speicherkarte sind ein Microrechner und ein Speicherbaustein angeordnet. In dem als Festwertspeicher ausgebildeten Speicherbaustein werden Daten verschlüsselt abgelegt. Ein eindeutiger Codierschlüssel zum Verschlüsseln der Daten ist in einem Speicherbaustein des Microrechners abgelegt. In dem Speicherbaustein wird auch ein Zertifizierungsschlüssel des Microrechners abgelegt, welcher mit dem Codierschlüssel verschlüsselt wurde. Zum Überprüfen von Manipulationen an der Speicherkarte werden die verschlüsselten Daten aus dem Speicherbaustein ausgelesen. Die ausgelesenen Daten werden mit dem Codierschlüssel entschlüsselt, ebenso wie der Zertifizierungsschlüssel. Bei Übereinstimmung des aus dem Speicherbaustein ausgelesenen decodierten Zertifizierungsschlüssel mit dem in dem Speicherbaustein gespeicherten Zertifizierungsschlüssel wird darauf geschlossen, dass keine Manipulation an dem Microrechner oder an dem Speicherbaustein vorgenommen wurde.

Die US 6 378 072 B1 beschreibt ein Verfahren zum Verschlüsseln und Entschlüsseln von Daten mittels eines asymmetrischen Verfahrens. Hierbei wird also ein öffentlicher Schlüssel zum Verschlüsseln verwendet und ein geheim gehaltener, privater Schlüssel zum Entschlüsseln.

Aufgabe der vorliegenden Erfindung ist es daher, ein Fahrzeug-Steuergerät zu schaffen, bei dem ein Austausch eines Speicherbausteins und die Änderung der Daten sowie des Codes auf dem Speicherbaustein nicht möglich ist, ohne die Funktionsfähigkeit des Steuergeräts zu beeinflussen oder zumindest die Veränderung zu diagnostizieren und diese ggf. zur Anzeige zu bringen.

Die Aufgabe wird gelöst durch den unabhängigen Anspruch.

Durch Sicherung der ursprünglichen Kennung des Speicherbausteins wird eine Konstante gegeben, die zur Erkennung des Austauschs eines Speicherbausteins oder der Manipulation von Daten dienen kann. Die Kennung kann eine Identifikationsnummer des Speicherbausteins darstellen. Es ist aber auch möglich, als Kennung Daten, die zu einem bestimmten Zeitpunkt aufgenommen wurden, in Form eines Fingerprints zu verwenden Schließlich kann die Kennung weitere Informationen, wie beispielsweise das Herstellungsdatum bzw. das Datum der ersten Inbetriebnahme des Steuergeräts beinhalten.

Eine Authentifizierung der Speicherbausteine erfolgt durch Verschlüsselung von Daten oder Programmen, wobei der Schlüssel mindestens einen Teil einer der ursprünglichen Kennungen beinhaltet. Dadurch kann erzielt werden, dass bei Abweichung der Kennung von einer ursprünglichen Kennung der Mikrorechner nicht auf Daten oder Programme zugreifen kann und das Steuergerät damit nicht lauffähig ist.

Vorzugsweise wird die mindestens eine Kennung in einem nur einmalig beschreibbaren OTP (one-time-programmable)-Bereich des Mikrorechners abgelegt. Dadurch kann eine Modifikation der Kennung in dem Mikrorechner verhindert werden und so der Schutz vor Manipulationen erhöht werden.

Die in dem Mikrorechner gespeicherten Kennungen werden zumindest teilweise zur Authentifizierung von Speicherbausteinen verwendet. Bei jedem Hochfahren des Steuergeräts können anhand der ursprünglichen Kennungen, die in dem Mikrorechner abgelegt sind, die tatsächlich mit dem Mikrorechner verbundenen Speicherbausteine einer Authentifizierung unterzogen werden.

Die Authentifizierung der Speicherbausteine kann durch Vergleich der im Mikrorechner gespeicherten Kennung der ursprünglichen Speicherbausteine mit der Kennung der aktuellen Speicherbausteine erfolgen. Hierbei werden bei der Inbetriebnahme des Steuergeräts von dem Mikrorechner die aktuellen Kennungen der mit dem Mikrorechner verbundenen Speicherbausteine ausgelesen und mit den ursprünglichen Kennungen, die in dem Mikrorechner abgelegt sind, verglichen. Dadurch kann ein Austausch eines oder mehrerer der Speicherbausteine erkannt und Maßnahmen durchgeführt werden, beispielsweise kann eine Betätigung des Steuergeräts durch den Mikrorechner verhindert werden.

Die unverschlüsselt oder verschlüsselt auf zumindest einem der Speicherbausteine abgelegten Daten oder Programme können in Form eines Fingerprints dargestellt werden, der die Daten und Programme zu einem gewissen Zeitpunkt festhält. Werden die Daten oder Programme geändert, so kann bei der erneuten Erfassung des Fingerprints durch Vergleich mit dem verschlüsselt abgelegten Fingerprint eine Manipulation erkannt werden.

Das Steuergerät weist eine Authentifizierungseinheit zur Authentifizierung der mit dem Mikrorechner verbundenen Speicherbausteine auf, wobei diese ein Programm, das auf dem Mikrorechner abgelegt ist, darstellt.

Die Authentifizierungseinheit ist daher durch ein Programm gebildet, das auf dem Mikrorechner abgelegt ist und dem Vergleich der ursprünglichen Kennungen mit zumindest einer aktuellen Kennung zumindest eines Speicherbausteins dienen kann. Das Programm zur Verschlüsselung von Daten oder Programmen greift auf mindestens eine der in dem Mikrorechner gespeicherten ursprünglichen Kennungen zu.

Um die Manipulation durch Veränderung der in dem Mikrorechner abgelegten Kennung zu verhindern, kann der Mikrorechner einen Bereich, der nur einmalig beschreibbar ist (OTP-Bereich), aufweisen und die spezifische, ursprüngliche Kennung des mindestens einen Speicherbausteins in diesem Bereich abgelegt sein. Dieser OTP-Bereich kann zusätzlich lesegeschützt ausgestaltet sein.

Mindestens einer der Speicherbausteine des Steuergeräts kann in dem Mikrorechner integriert sein. Es kann sich dabei um einen embedded Flash-Speicher oder um eine E²PROM Emulation im embedded Flash Speicher handeln.. Auch in diesem Fall kann das Ablegen einer Kennung des Speicherbausteins in einem OTP-Bereich des Mikrorechners vorteilhaft genutzt werden. Analog zu externen Speichern kann eine Authentifizierung der Speicherbausteine durch Verschlüsselung von Daten oder Programmen erfolgen, wobei der Schlüssel mindestens einen Teil einer der ursprünglichen Kennungen beinhaltet. Dadurch kann erzielt werden, dass bei Abweichung der Kennung von einer ursprünglichen Kennung der Mikrorechner nicht auf fähig ist.

Die Erfindung wird im Folgenden anhand der beiliegenden Zeichnungen, die sich auf mögliche Ausführungsbeispiele beziehen, beschrieben. Es zeigen:
Figur 1: eine schematische Blockdarstellung einer ersten Ausführungsform eines Steuergeräts;
Figur 2: ein Flussdiagramm, das ein Verfahren darstellt;
Figur 3: eine schematische Blockdarstellung des erfindungsgemäßen Steuergeräts; und
Figur 4: eine schematische Blockdarstellung einer dritten Ausführungsform eines Steuergeräts.

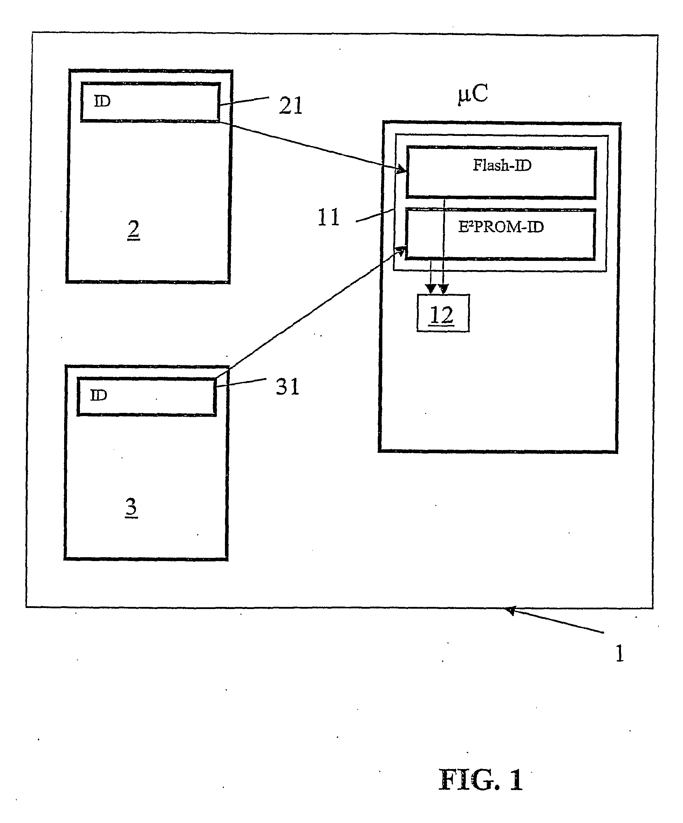

In Figur 1 ist eine Ausführungsform eines Steuergeräts dargestellt. Der Aufbau von Steuergeräten, wie beispielsweise Motorsteuergeräten, ist hinlänglich aus dem Stand der Technik bekannt, so dass hierauf nur insoweit eingegangen wird, wie dies für das Verständnis der Erfindung erforderlich ist. Das Steuergerät 1 umfasst in der dargestellten Ausführungsform einen Microrechner µC, einen Flash-Speicher 2 und einen EEPROM (E²PROM) 3. Der Flash-Speicher 2 und der E²PROM 3 weisen jeweils einen OTP-Bereich 21, 31 auf. Diese sind vorzugsweise nicht lesegeschützt ausgestaltet. Auch in dem µC ist ein OTP-Bereich 11 vorgesehen. Weiterhin ist in dem µC eine Authentifikationseinheit 12 enthalten. Diese kann eine elektronische Schaltung oder ein Programm in dem µC darstellen.

Die Speicherbausteine Flash 2, E²PROM 3 sind in der dargestellten Ausführungsform mit bausteinindividuellen Identifikationsnummern ID versehen. Diese werden in der Regel beim Hersteller des Bausteins geschrieben und in den OTP-Bereich 21, 31 der einzelnen Bausteine abgelegt.

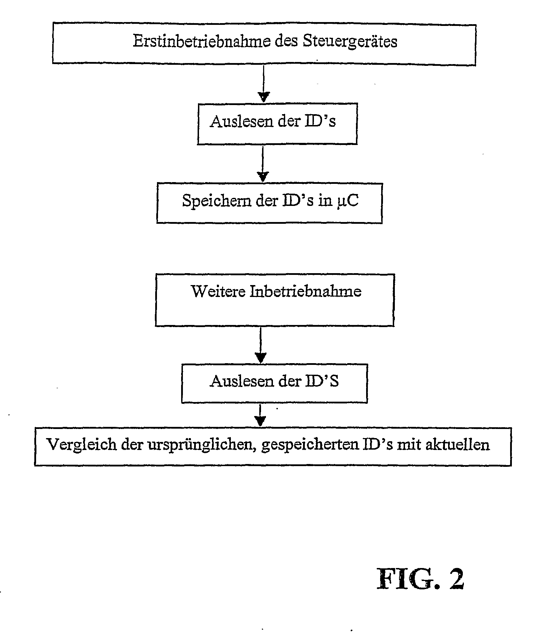

In Figur 2 ist ein Flussdiagramm gezeigt, das ein Verfahren anhand der in Figur 1 gezeigten Ausführungsform des Steuergeräts darstellt.

Im Herstellungsprozess des Steuergeräts werden bei der Erstinbetriebnahme des Steuergeräts von dem Mikrorechner µC die ID's der einzelnen Speicherbausteine 2, 3 ausgelesen und in einen einmalig beschreibbaren OTP-Bereich 11 des µC abgelegt. Ab diesem Zeitpunkt ist die Funktion des Steuergeräts 1 nur in Verbindung mit den dem µC bekannten ID's der externen Speicherbausteine 2, 3 möglich.

Bei jeder weiteren Inbetriebnahme des Steuergeräts 1 wird von dem µC die ID aller mit diesem verbundenen Speicherbausteine 2, 3 erneut ausgelesen. In einer Vergleichseinheit können dann diese aktuellen ID's mit den ursprünglichen Kennungen, die in dem OTP-Bereich 11 des µC abgelegt sind, verglichen werden. Wird bei diesem Vergleich festgestellt, dass eine der ID's nicht mit einer der ursprünglichen ID's übereinstimmt, so wird das Steuergerät an seiner Funktion gehindert oder zumindest die Veränderung diagnostiziert und diese ggf. zur Anzeige gebracht.

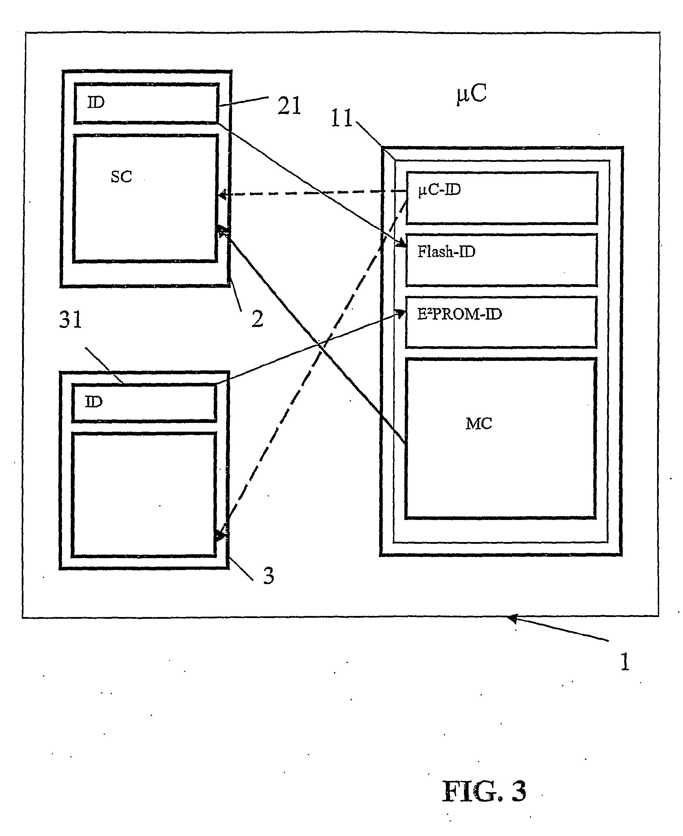

In Figur 3 ist ist das erfindungsgemäße Steuergerät 1 gezeigt. Der Aufbau ist im wesentlichen gleich dem Aufbau der Ausführungsform aus Figur 1, allerdings ist in dieser Ausführungsform der Code zum Betreiben des Steuergeräts in einen Master-Code (MC) und einen Sub-Code (SC) unterteilt. Der Mastercode MC enthält elementare, essentielle Funktionalitäten zum Betrieb des Steuergeräts, z.B. das Programm zur Signalerzeugung für angeschlossene Aktuatoren (nicht dargestellt) des Steuergeräts oder das Programm für die Berechnung der Stellgrößen und Stellwerte. Der Mastercode MC kann weiterhin Daten umfassen. In dem Sub-Code SC sind weitere Programme und Daten enthalten. Das Steuergerät ist nur funktionsfähig unter Verwendung beider Codes MC und SC. In der dargestellten Ausführungsform ist der Sub-Code SC in einem wiederbeschreibbaren Bereich des Flash-Speichers 2 enthalten. Der Master-Code MC ist in einem OTP-Bereich 11 des Mikrorechners *µ*C enthalten. Der Master-Code ist vorzugsweise gegen Auslesen über die Kontaktierung geschützt. Dies kann beispielsweise physikalisch durch Durchlegieren einer Transistorstrecke oder schaltungstechnisch erzielt werden. Der Sub-Code SC kann im Gegensatz zu dem Master-Code MC modifiziert beziehungsweise überschrieben werden. Dies erlaubt ein Updaten des Subcodes oder ein Reprogrammieren.

Der *µ*C weist weiterhin eine Identifikationsnummer *µ*C-ID auf. Auch diese ist in einem lesegeschützten OTP-Bereich des *µ*C abgelegt. In dem E²PROM sind weitere Daten für den Betrieb des Steuergeräts in einem wiederbeschreibbaren Bereich abgelegt. Diese Daten können beispielsweise Adaptionswerte sowie Leerlaufdrehzahlen bei einem Motorsteuergerät, sein.

Beim Initialisieren des Steuergeräts lernt der Mikrorechner *µ*C die in dem OTP-Bereich 21, 31 der Speicherbausteine 2, 3 abgelegten und dadurch nicht veränderbaren Identifikationsnummern an und legt diese in einem OTP-Bereich des Mikrorechners *µ*C, der optional auch lesegeschützt ausgestaltet sein kann, ab.

Von diesem Zeitpunkt an sind dem Mikrorechner *µ*C die mit diesem verbundenen Speicherbausteine 2, 3 über ihre ID bekannt.

Die in dem Mikrorechner abgelegten ID's der Speicherbausteine dienen zur Verschlüsselung von Daten oder Programmen. So können die auf dem E²PROM abgelegten Daten beispielsweise durch ein symmetrisches Verschlüsselungsverfahren codiert werden, in dem der Schlüssel zumindest einen Teil der ID zumindest eines der Speicherbausteine 2, 3 umfasst. Bei einem Motorsteuergerät können in dem E²PROM beispielsweise Lernwerte, Fertigungsdaten, Anpassungswerte und dergleichen gespeichert sein. Zur Verschlüsselung sind grundsätzlich alle symmetrischen Verschlüsselungsverfahren geeignet, die die Einbeziehung eines steuergeräteindividuellen Kennzeichnens erlauben. Vorzugsweise werden die Daten des E²PROM durch einen Schlüssel verschlüsselt, der zusätzlich oder alternativ zu der ID der externen Speicherbausteine die ID des Mikrorechners µC umfasst. Hierdurch wird eine steuergeräteindividuelle Verschlüsselung erzielt, die ein Austauschen des E²PROMs oder ein Überschreiben der darauf gespeicherten Daten unmöglich macht bzw. den Betrieb des Steuergeräts nach einer solchen Manipulation verhindert. Der Schlüssel wird vorzugsweise in dem RAM-Speicher des Mikrorechners µC abgelegt. Dadurch wird der Schlüssel bei jedem Hochlaufen des Steuergeräts unter Einbeziehung eines steuergeräteindividuellen Kennzeichens (z.B. der ID des µC und gegebenenfalls der ID's der Speicherbausteine) gebildet und ist somit steuergeräteindividuell.

Weiterhin kann der Subcode SC auf dem Flash-Speicher 2 ganz oder teilweise verschlüsselt abgelegt sein. Auch für diese Verschlüsselung kann die ID der einzelnen Speicherbausteine oder des Mikrorechners bzw. ein Teil dieser ID in den Schlüssel integriert werden. Die Entschlüsselung der Daten in dem Sub-Code wird durch den Master-Code durchgeführt. Da dieser in einem lesegeschützten Bereich des Mikrorechners abgelegt ist, kann ein Auslesen des Programms und damit eine Vervielfältigung der Software verhindert werden.

Die Überwachung des Sub-Codes gegenüber Manipulation, die durch den µC im Master-Code sicher gestellt wird, kann auch über andere Verfahren als der Verschlüsselung erfolgen. So können zusätzlich oder alternativ lineare/CRC-Checksummenbildung oder Hash-Wertbildung verwendet werden. Zur Erkennung einer vorgenommenen Manipulation der Daten und gegebenenfalls Teile des Subcodes werden z.B. über ausgewählte Bereiche lineare Checksummen gebildet und das Ergebnis verschlüsselt als Fingerprint in den Sub-Code eingebracht. Der Mastercode berechnet im Steuergerätebetrieb, beispielsweise bei einem Signal an Klemme 15, über den gleichen vordefinierten Bereich den Vergleichswert (z.B. lineare Checksumme) und prüft diesen gegen den entschlüsselten, im Sub-Code verschlüsselt abgelegten Referenzwert. Die Art der Manipulationserkennung kann beliebig gewählt werden.

Nach der Erkennung einer Manipulation werden vom Master-Code Maßnahmen eingeleitet, die gegebenenfalls zum Steuergeräteausfall führen.

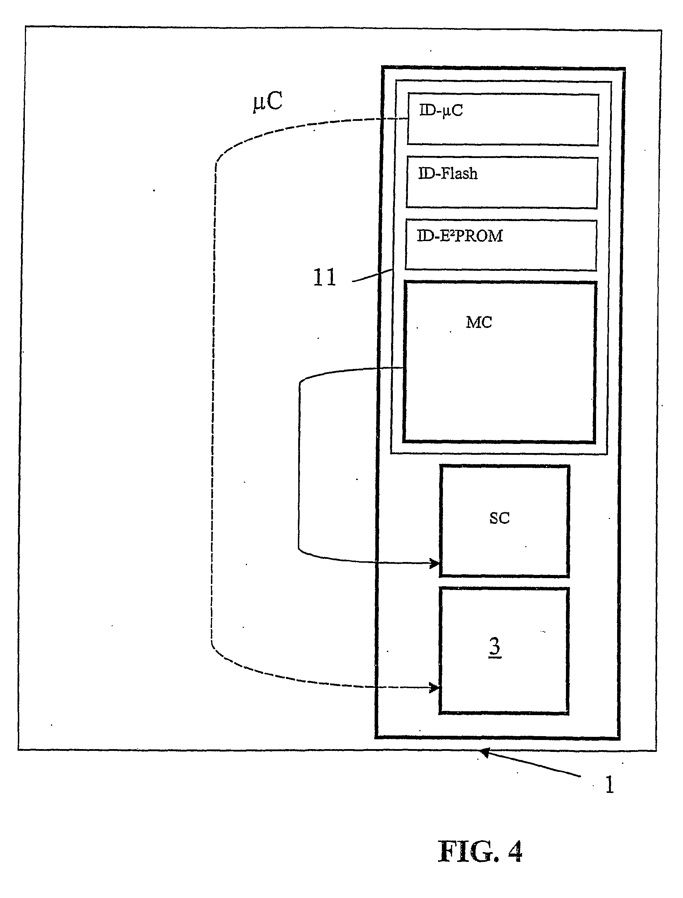

In Figur 4 ist eine weitere Ausführungsform des Steuergeräts gezeigt. Bei dieser Ausführungsform sind die Speicherbausteine 2 und 3 in den Mikrorechner *µ*C integriert. Der *µ*C weist hierbei einen embedded Flash-Speicher auf, wobei der E²PROM emuliert wird. Diese Ausgestaltung des Steuergeräts weist zwar den Vorteil auf, dass ein Austausch der Speicherbausteine zuverlässig verhindert werden kann, allerdings sind die Daten bei der Emulation des E²PROM nur blockweise überschreibbar.

Das Verfahren zum Schutz gegen Manipulation erfolgt bei diesem Steuergerät mit internem Speicher im wesentlichen wie das oben für Steuergeräte mit externen Speichern beschriebene. Auch hierbei können insbesondere die Daten des emulierten E²PROM verschlüsselt abgelegt werden und durch einen Schlüssel, der zumindest eine individuelle Kennung des Steuergeräts, wie die *µ*C-ID und/oder die Flash-ID umfasst, entschlüsselt werden. Ebenso können die in dem Subcode, der in dem Flash-Speicher des *µ*C abgelegt ist, enthaltenen verschlüsselten Daten oder Fingerprints durch den Mastercode entschlüsselt werden. Auch hierbei wird vorzugsweise eine steuergeräteindividuelle Kennung in dem Schlüssel integriert.

Die Erfindung ist nicht auf die dargestellten Ausführungsformen beschränkt. So kann als Kennung der einzelnen Speicherbausteine beispielsweise das Herstellungdatum des Steuergeräts in Betracht kommen. Hierdurch kann eine Manipulation während der Garantiezeit verhindert werden.

Weiterhin ist es beispielsweise auch möglich, den zum Betrieb des Steuergeräts notwendige Code vollständig im lesegeschützten OTP-Bereich des *µ*C abzulegen statt diesen aus einem Master-Code und einem Sub-Code zusammenzusetzen.

Das Steuergerät kann im Sinne dieser Erfindung beispielsweise ein Motorsteuergerät, ein Getriebesteuergerät oder auch ein Kombiinstrument darstellen.

Mit dem erfindungsgemäßen Steuergerät können gegenüber herkömmlichen Steuergeräten eine große Anzahl von Vorteilen erzielt werden.

Mit dem erfindungsgemäßen Steuergerät kann auf zuverlässige Weise ein Austausch einzelner oder mehrerer Bausteine verhindert werden, da durch einen solchen Austausch die Funktion des Steuergeräts verhindert werden kann. Das Auslesen eines für die Funktion der Steuerung zwingend erforderlichen Teils des Programms bzw. der Daten ist nicht möglich, wenn dieser Teil in dem lesegeschützten OTP-Bereich abgelegt ist. Damit kann eine Vervielfältigung der Software verhindert werden. Auch ist der Zugriff auf vertrauliche Daten über die Kontaktierung des Bausteins nicht möglich, wenn diese in dem lesegeschützten OTP-Bereich des µC abgelegt sind. Besonders sicher kann das Steuergerät vor Manipulationen geschützt werden, indem es nur in der Kombination von Master- und Sub-Code lauffähig ist. Eine Veränderung des im reprogrammierbaren, gegebenenfalls externen Speicher, z.B. Flash, abgelegten Sub-Codes führt ohne eine Anpassung des Mastercodes zu einem Steuergeräteausfall. Weiterhin können Daten, die beispielsweise auf einem E²PROM abgelegt sind, steuergeräteindividuell verschlüsselt werden. Auch die Entschlüsselung solcher Daten kann von einer Kennung des Steuergeräts abhängig gemacht werden. Zusätzliche Sicherheit kann dadurch geschaffen werden, dass die Ver- und Entschlüsselung von dem Verbund der einzelnen Bausteine mit den dem µC bekannten ID's abhängig gemacht wird.

Zusammenfassend kann also festgestellt werden, dass durch das Speichern einer unveränderbaren Kennung der Speicherbausteine eines Steuergeräts die Manipulation von Steuergeräten, wie beispielsweise Chip-Tuning bei Motorsteuergeräten, zuverlässig vermieden werden kann.

## Patentansprüche

1. Fahrzeug-Steuergerät (1) für eine Kfz-Komponente, das einen Mikrorechner (µC) mit einer in einem lesegeschützten, one time programmable Bereich (11) des Mikrorechners abgelegten, bausteinindividuellen Identifikationsnummer (µC-ID) und ein E2PROM (3) mit einer bausteinindividuellen Identifikationsnummer (31) beinhaltet, auf dem verschlüsselte Daten abgelegt sind, die durch eine steuergeräteindividuelle, symmetrische Verschlüsselung mit Hilfe eines Schlüssels verschlüsselt worden sind,
wobei der Schlüssel die bausteinindividuelle Identifikationsnummer (31) des E2PROM (3) des Fahrzeug-Steuergeräts und die bausteinindividuelle Identifikationsnummer (µC-ID) des Mikrorechners (µC) des Fahrzeug-Steuergeräts umfasst, und
wobei der Schlüssel in einem RAM-Speicher des Mikrorechners (µC) des Fahrzeug-Steuergeräts abgelegt ist, so dass der Schlüssel bei jedem Hochfahren des Steuergeräts neu gebildet wird.

2. Fahrzeug-Steuergerät nach Patentanspruch 1, **dadurch gekennzeichnet, dass** die Identifikationsnummer des E2PROM (3) in einem lesegeschützten, one time programmable Bereich des Steuergerätes abgelegt ist.

## Claims

1. Vehicle control device (1) for a motor vehicle component, which device contains a microcomputer (µC) having a component-specific identification number (µC-ID) which is stored in a read-only, one-time-programmable region (11) of the microcomputer, and an E2PROM (3) having a component-specific identification number (31), on which the encrypted data are stored which have been encrypted by a control-device-specific, symmetrical encryption using a key, the key comprising the component-specific identification number (31) of the E2PROM (3) of the vehicle control device and the component-specific identification number (µC-ID) of the microcomputer (µC) of the vehicle control device, and the key being stored in a RAM memory of the microcomputer (µC) of the vehicle control device so that the key is newly generated each time the control device is booted up.

2. Vehicle control device according to claim 1, **characterised in that** the identification number of the E2PROM (3) is stored in a read-only, one-time-programmable region of the control device.

## Revendications

1. Appareil de commande de véhicule (1) pour un composant d'automobile qui comprend un micro-ordinateur (µC) avec un numéro d'identification (µC-ID) spécifique au composant, à lecture seule, mémorisé dans une zone du micro-ordinateur programmable une seule fois (11) et une mémoire E2PROM (3) avec un numéro d'identification spécifique au composant (31), sur laquelle sont mémorisées des données codées qui ont été codées par un codage symétrique spécifique à l'appareil de commande à l'aide d'un code,
dans lequel le code comprend le numéro d'identification spécifique au composant (31) de la mémoire EEPROM (3) de l'appareil de commande de véhicule et le numéro d'identification spécifique au composant (µC-ID) du micro-ordinateur (µC) de l'appareil de commande de véhicule, et
dans lequel le code est mémorisé dans une mémoire RAM du micro-ordinateur (µC) de l'appareil de commande de véhicule de sorte que le code soit reformé à chaque lancement de l'appareil de commande.

2. Appareil de commande de véhicule selon la revendication 1, **caractérisé en ce que** le numéro d'identification de la mémoire E2PROM (3) est mémorisé dans une zone de l'appareil de commande à lecture seule programmable une seule fois.
